## Europäisches Patentamt

## European Patent Office

## Office européen des brevets

(19)

(11) Veröffentlichungsnummer: **0 070 421**
A1

(12) # EUROPÄISCHE PATENTANMELDUNG

(21) Anmeldenummer: **82105681.9**

(22) Anmeldetag: **26.06.82**

(51) Int. Cl.³: **H 02 G 3/04**

(30) Priorität: **16.07.81 DE 3128085**

(43) Veröffentlichungstag der Anmeldung: **26.01.83**
**Patentblatt 83/4**

(84) Benannte Vertragsstaaten: **AT BE CH DE FR GB IT LI LU NL**

(71) Anmelder: **Planmöbel Eggersmann GmbH & Co. KG, Königsberger Strasse 2, D-4992 Espelkamp (DE)**

(72) Erfinder: **Votteler, Arno, Hauptmannsreute 28, D-7000 Stuttgart 1 (DE)**
Erfinder: **Lanuzzi, Max, Im Leisibüel, CH-8484 Weisslingen (CH)**
Erfinder: **Dubach, Fredi, Kemptener Strasse 6, CH-8345 Adetswil (CH)**
Erfinder: **Schreiner, Herbert, Züricher Strasse 165, Frauenfeld (CH)**

(74) Vertreter: **Wangemann, Horst, Dipl.-Ing., Stresemannstrasse 28, D-4000 Düsseldorf (DE)**

(54) **Freistehende Versorgungssäule, insbesondere für Büros.**

(57) Die Erfindung betrifft eine freistehende Versorgungssäule (3) für das Zuführen von Energie und das Zu- und Abführen von Kommunikation zu und von Arbeitsgeräten, insbesondere für Büros, mit einem Fußsockel oder einer Fußplatte (2) und mit an der Säule angebrachten radialen, horizontal schwenkbaren Tragarmen (15, 34) für Arbeitsgeräte. Hierbei soll eine möglichst große Anzahl von Tragarmen wahlweise an der Säule anbringbar sein, die alle individuell verstellbar sind. Schwingungen des einen Armes sollen nicht auf Nachbararme übertragen werden wie das Ein- und Ausbauen der Arme ohne Werkzeug schnell erfolgen soll. Hierzu ist vorgesehen, daß die Tragarme (15, 34) einen horizontalen (16, 43) und einen vertikalen (22, 35) Abschnitt aufweisen und in oder um den oberen Abschnitt der Säule (3) mehrere senkrechte Rohrabschnitte kreisförmig um die Säulenmittelachse (S) angeordnet sind, an denen die vertikalen Abschnitte (22, 35) der in ihrer Höhenstellung einzeln einstellbaren und schwenkbaren Tragarme (15, 34) mit Versorgungsleitungen gehalten sind.

**Patentanwalt**

**Dipl.-Ing. H. Wangemann**

Dresdner Bank, Düsseldorf, Kto. 51–419 655
Postscheck-Konto: Köln 1688 12

0070421

**4 Düsseldorf, den** 23.6.1982
Stresemannstraße 28
Fernruf 36 35 31

Meine Akte Nr. 6128Eu W/Lo

Firma Planmöbel Eggersmann GmbH & Co. KG, Königsberger Strasse 2, 4992 Espelkamp/BR Deutschland.

"Freistehende Versorgungssäule, insbesondere für Büros".

Die Erfindung bezieht sich auf eine freistehende Versorgungssäule zum Zuführen von Energie und zum Zu- und Abführen von Kommunikationen zu und von Arbeitsgeräten, insbesondere für Büros, der im Oberbegriff des Hauptanspruches genannten Art. Die von den Tragarmen gehaltenen Geräte sind z.B. Telefonapparate, Lampen, Bildschirme.

Es sind schwenkbare und vorzugsweise als Scherenarme ausgebildete Tragarme für Telefonapparate bekannt, die um eine an einem Tisch zu befestigende senkrechte Haltestange schwenkbar und in radialer Richtung ausfahrbar sind.

Durch die CH-PS 573.029 ist eine Anordnung für die Zuführung von Informationen und Energie in einem Gebäuderaum, insbesondere einem Großraumbüro bekannt, die eine Fußplatte mit einer darauf befestigten freistehenden zylindrischen Säule aufweist. Auf dieser Säule sind auf- und abwärts bewegbare und um die Säule drehbare Ringe oder Muffen angeordnet, in die je ein Tragarm horizontal hineingesteckt ist. Der Oberbegriff des Hauptanspruches geht von dieser bekannten Vorrichtung aus.

Dieser gegenüber besteht die Aufgabe der Erfindung darin, die Versorgungssäule mit einer großen Anzahl von individuell einstellbaren Tragarmen auch auf gleicher Höhe vorsehen zu können, auf denen Geräte neben der Säule oberhalb Tischhöhe auf einer Kreislinie oder annähernd einer Kreislinie gehalten werden, wobei den statischen Anforderungen und der Forderung nach Schwingungsfreiheit der einzelnen Geräte an den Armenden bei gleichzeitiger einfacher konstruktiver Ausbildung und Variations- und Verstellmöglichkeit ohne Werkzeuge Rechnung getragen wird.

Zur Lösung dieser Aufgabe sieht die Erfindung die Merkmale der kennzeichnenden Teile des Hauptanspruches vor. - Die Merkmale der Unteransprüche dienen der Verbesserung und Weiterentwicklung der Merkmale des Hauptanspruches.

Die in oder an den oberen Bereich der Versorgungssäule einsteckbaren Tragarme geben die Möglichkeit, die auf gleicher Höhe oder aber in unterschiedlicher Höhe gelegenen freien Enden dieser Arme unabhängig voneinander um die Säule in eine Position zu bringen, in der diese Tragarmenden für den Benutzer die günstigste Stellung, beispielsweise über einem Arbeitstisch einnehmen. Ferner kann die Anzahl der Arme um die Säule in der Art variiert werden, daß beispielsweise bei drei um die Säule kreisförmig angeordneten Tischen jedem Tisch drei oder vier Tragarme, also neun oder zwölf unabhängig voneinander verstellbare Trägerarme vorgesehen werden können, auf denen z. B. Telefone, Bildschirme und weitere Bürogeräte Aufstellung finden können. Für den Nichtgebrauch können die Tragarme in eine Position geschwenkt werden, wo sie nicht hinderlich sind, bzw. können die Tragarme leicht entfernt werden.

Wesentlich ist, die Höhenstellung sowie die radiale Stellung der einzelnen Tragarme unabhängig voneinander ändern zu können, so daß das freie Ende der Tragarme in bestimmten Grenzen jede Stellung im Raum einnehmen kann. Da nach einer besonders vorteilhaften Ausführungsform das freie Ende der Tragarme auch noch um seine Längsachse drehbar ist, kann das freie, eine Lampe oder einen Bildschirm tragende Tragarmende auch noch eine einstellbare geneigte Lage gegenüber der Horizontalen einnehmen. - Desweiteren zeigt sich als Vorteil, daß die Anzahl der zu verwendenden Tragarme dadurch leicht geändert werden kann, daß die vertikalen Abschnitte der Tragarme nur in die senkrechten Hülsen oder Muffen an der Säule einzusetzen sind oder daraus herauszunehmen sind.

Auf der Zeichnung sind Ausführungsbeispiele der erfindungsgemäßen Versorgungssäule dargestellt und zwar zeigen

Fig. 1    die Säule in Seitenansicht und Ansicht von oben,
und 2

Fig. 3    eine Ausführungsform des oberen Abschnittes der Säule im Schnitt,

Fig. 4 einen entsprechenden horizontalen Schnitt durch diese Säule,

Fig. 5 eine weitere Darstellung der Schürze, die die oberen Rohrabschnitte umgibt,

Fig. 6 eine Teilansicht von oben der Ausführungsform der Abdeckplatte nach Fig. 5,

Fig. 7 zwei weitere Ausführungsformen der Anbringung der Tragarme an den Rohrabschnitten und

Fig. 8 eine schematische Draufsicht auf die Versorgungssäule mit einer tischhohen Tragplatte und drei um die Säule angeordnete Arbeitstischen mit entsprechenden Tragarmen.

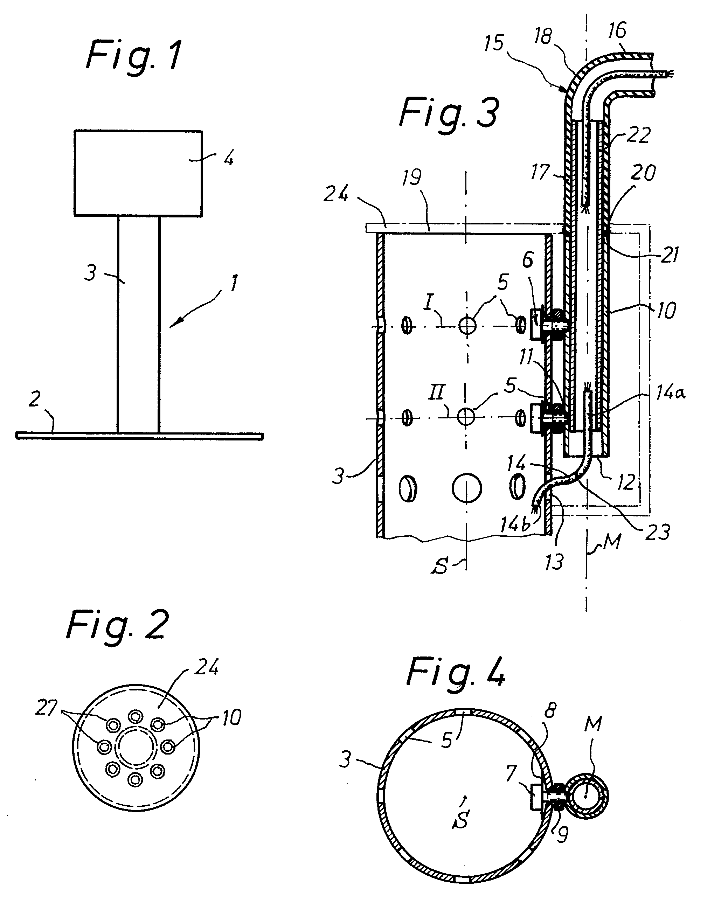

Die erfindungsgemäße Versorgungssäule 1 weist einen vorzugsweise runden plattenartigen Fuß 2 auf, auf dem mittig und senkrecht die Hohlsäule 3 angeordnet ist. Ihr oberer Abschnitt ist wie untenstehend noch erläutert wird, von einer zylindrischen Schürze 4 im Abstand umgeben, so daß sich das Gesamtbild der Versorgungssäule nach Fig. 1 ergibt.

Der obere Abschnitt der Hohlsäule 3 weist in zwei horizontalen Ebenen I, II paarweise übereinander gelegene kreisförmig angeordnete Bohrungen 5 auf, durch die Schrauben od.dgl. Befestigungsmittel 6 gesteckt sind, deren Kopf 7 z.B. durch eine Platte oder Scheibe 8, die sich gegen die Innenseite der Hohlsäule 3 abstützt, in seiner Lage gehalten wird.

Der Schraubenschaft 9 jeweils zweier übereinander angeordneter Schrauben 6 ragt durch die entsprechenden Bohrungen 5 und ist in je einen Rohrabschnitt 10 eingeschraubt, wozu dieser entsprechende Gewindebohrungen 11 trägt. Die Anordnung dieser Bohrungen ist derart vorgesehen, daß jeweils zwei übereinander gelegene Bohrungen 5 koachsial mit den Gewindebohrungen 11 fluchten. Jede andere lösbare oder feste Verbindung des Rohrabschnitts 10 mit der Säule 3 ist möglich.

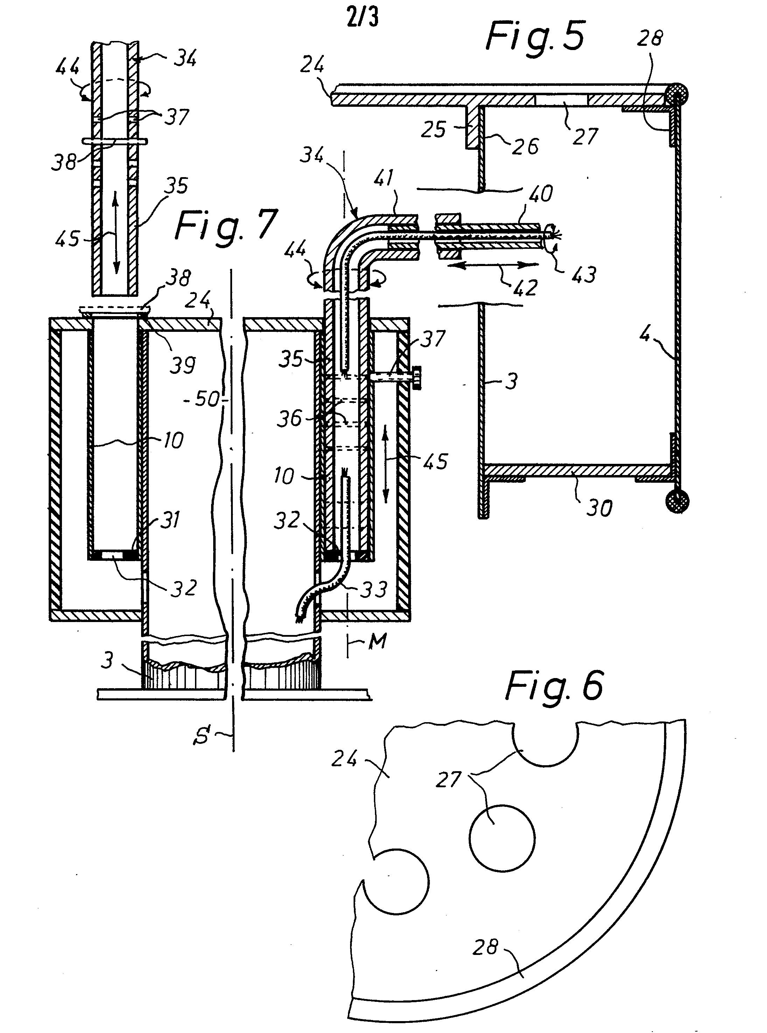

Unterhalb des Endes 12 jedes zentrisch zur Mittelachse S der Säule angebrachten Rohrabschnittes 10 sind wiederum in kreisförmiger Anordnung und auf senkrechter Höhe der Löcher 5 weitere radiale Bohrungen 13 vorgesehen, die einen größeren Durchmesser besitzen als die Bohrungen 5 und vorzugsweise glattwandig sind oder deren Rand sogar leicht abgerundet ist. Durch jedes dieser Löcher 13 ist die Versorgungsleitung 14 für einen Tragarm 15 hindurchgeführt, dessen in Fig. 3 und 7 nicht dargestelltes Ende einen Geräteträger in Form eines Leuchtensockels für eine Lampe, eines Tragpodestes für einen Bildschirm oder einer Tragplatte für ein Telefon trägt. Der Tragarm hat bei den Ausführungsformen nach Fig. 3 und 7 rechtwinklige Gestalt, wobei der gerade horizontale Abschnitt 16 in den geraden senkrechten Abschnitt 17 an dem Bogenteil 18 übergeht.- Bei der Ausführungsform nach Fig. 3 besitzen der Rohrabschnitt 10 und der Tragarm 15 gleichen Außen- und Innendurchmesser. Da der Rohrabschnitt 10 mit dem Stirnrand 19 der Säule 3 abschneidet, kann sich der vertikale Abschnitt 17 des Tragarmes 15 bis auf Höhe dieses oberen Randes 19 erstrecken, wo sein Stirnrand 20 auf dem Stirnrand 21 des Rohrabschnittes 10 aufliegt, aber auch beliebig lange Abstandsbuchsen zwischen die beiden Stirnränder 20, 21 eingesetzt werden können, so daß der Abschnitt 16 in die bereits gewünschte Höhenlage gebracht werden kann.

In dem senkrechten Abschnitt 17 des Tragarmes 15 ist eine Innenhülse 22 befestigt, die in den Rohrabschnitt 10 derart einsteckbar ist, daß hierdurch der Tragarm 15 in seiner Lage gehalten wird und hierbei um die Mittelachse M der Traghülse geschwenkt werden kann. Die Höhenlage des Abschnitts 16 kann auch mit Hilfe der in dem Abschnitt 17 befestigten Hülse 22 derart erfolgen, daß durch den Rohrabschnitt 10 ein Bolzen ragt, der durch Bohrungen in unterschiedlicher Höhe in den Rohrabschnitt 10 ragt und auf dem die Hülse 22 aufsitzt.

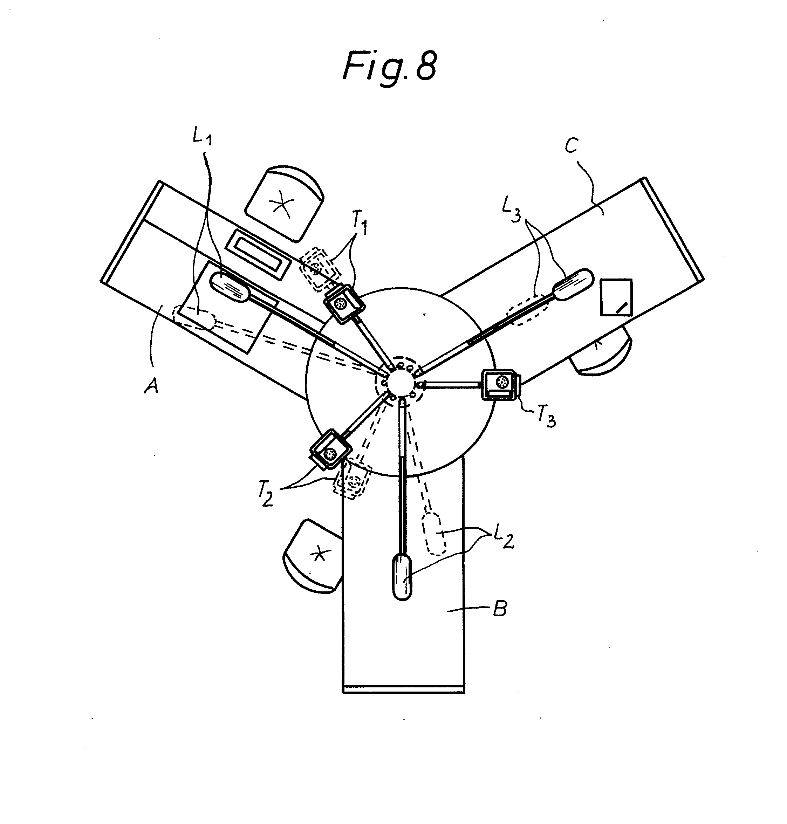

Um die Säule 3 sind wahlweise mittels durch die Bohrungen 5 gesteckter Verbindungsmittel ein Kranz oder Ring von Rohrabschnitten 10 befestigt, wobei in diese Rohrabschnitte wahlweise die Hülsen 22 von Tragarmen 15 eingesteckt werden können, wie dies Fig. 8 erkennen läßt, wobei die Stellung der einzelnen Tragarme um die Säule variiert werden kann, so wie es die Arbeitsweise des Benutzers der einzelnen Tische A, B und C in Fig. 8 verlangt.

Vorzugsweise wird die Leitung 14 in einem Leitungsabschnitt 14a in der Innenhülse 22 und einem Abschnitt 14b in der Säule 3 unterteilt, wobei bei 23 eine entsprechend lösbare Verbindung zwischen diesen beiden Abschnitten derart gegeben ist, daß nach dem Trennen des Verbindungsteils der Tragarm 15 von dem entsprechenden Rohrabschnitt 10 nach oben abgezogen werden kann, wenn der Tragarm nicht benötigt wird.

Der obere Abschnitt der Säule 3 und der Kranz oder Ring aus Rohrabschnitten 10 ist von einer tischähnlichen Platte 24 nach oben hin abgedeckt, die mit einem nach unten ragenden Flansch 25 an dem oberen Randbereich 26 der Säule 3 anliegt und hierdurch gegenüber der Säule 3 zentriert ist. Diese Platte trägt in gleicher Anordnung wie die der Rohrabschnitte 10 um die Säule 3 runde Löcher 27, so daß der untere Rand des Abschnittes 17 der Tragarme 15 durch das entsprechende Loch 27 der Platte 24 hindurchragen kann und die beiden Stirnseiten 20, 21 des Tragarmes 15 und des Rohrabschnittes 10 aneinanderliegen können.- Der Stirnrand 21 des Rohrabschnittes 10 kann auch mit der Oberseite der Platte 24 abschneiden.- Mittels eines Winkelstücks 28 ist die Schürze 4 an der Platte 24 befestigt. Der von dem äußeren Teil der Platte 24 mit der Schürze seitlich neben und teilweise unter dem Kranz oder Ring von Rohrabschnitten 10 umgebene Raum wird nach unten durch eine Scheibe 30 abgeschlossen (Fig. 5).

Bei der Ausführungsform nach Fig. 7 ist der Kranz oder Ring aus den Rohrabschnitten 10 wiederum mit der Säule 3 verbunden, wobei die Rohrabschnitte an ihrem unteren Ende mit einer Ringscheibe 31 versehen sind, durch deren Bohrung 32 die Versorgungsleitung 33 hindurchgeführt ist.- Der Tragarm 34 mit seinem vertikalen Abschnitt 35 weist einen Außendurchmesser auf, der dem Innendurchmesser der Rohrabschnitte 10 derart entspricht, daß der Abschnitt 35 des Tragarmes 34 in dem Rohrabschnitt 10 gehalten und in diesem um dessen Achse M geschwenkt werden kann. In Abständen übereinander weist der Abschnitt 35 des Tragarmes 34 bei der rechten Ausführungsform nach Fig. 7 Ringnuten 36 auf, in die der Kopf einer Schraube 37 derart hineinragt, daß der Tragarm 34 höhenmäßig einstellbar und in der gewählten Höhenstellung gehalten, dennoch um die Achse M schwenkbar ist.

Bei der Ausführungsform nach Fig. 7 - linke Darstellung - weist der vertikale Abschnitt 35 übereinander liegende Bohrungen 37 auf, die paarweise vorzugsweise in Richtung einer Sehne an den Durchmesser des Abschnitts 35 verlaufen und durch die ein Bolzen 38 derart steckbar ist, daß dessen freie Enden auf einer Ringscheibe 39 auf der Platte 24 Auflage finden.

Um die radiale Stellung des Endes der Tragarme 34 und damit die Geräteträger beispielsweise für die Telefonapparate, die Leuchten oder die Bildschirme verändern zu können, ist der horizontale Abschnitt des Tragarmes 34 nochmals unterteilt, wobei ein innerer Teil 40 in dem Abschnitt 41 des Tragarmes in Richtung des Pfeiles 42 verschiebbar ist. Gleichzeitig kann der Teil 40 auch in Richtung des Kreispfeiles 43 in dem Abschnitt
41 gedreht werden, so daß auch die Neigung des Versorgungsträgers am Ende des Abschnittes 40 veränderbar ist.

Die Pfeile 44 und 45 in Fig. 7 symbolisieren die
Bewegungsmöglichkeiten des Geräteträgers am Ende des Tragarmes.
Hierbei ergibt sich außer der Höhenverstellbarkeit die Drehbarkeit des Armes 34 um die Mittellinie M des Rohrabschnittes 10,
und ferner ein radiales Verstellen und Drehen des teleskopartigen Abschnittes 40 des Tragarmes 34 entsprechend den Pfeilen
42, 43, so daß jede Stellung des Geräteträgers oberhalb der
Arbeitstische A, B oder C unabhängig voneinander erreichbar ist,
wie dies auch mit den Telefonapparaten $T_1$, $T_2$, $T_3$ und den Lampen
$L_1$, $L_2$, $L_3$ in Fig. 8 wiedergegeben ist.

Von den vorstehend beschriebenen Ausführungsformen abweichend
können die Rohrabschnitte 10 auch im Innern einer stärkeren
Säule 3 als Käfig oder Ring angeordnet werden, der wie auch
der Kranz oder Ring der außenseitigen Rohrabschnitte 10, als
geschlossene von der Säule 3 lösbare Baueinheit hergestellt
werden kann, wobei die Zwischenräume zwischen den Rohrabschnitten, wie dies auf anderen Gebieten der Technik bekannt ist,
durch Flossen miteinander verbunden sind.

Der Vorteil der in der Fig. 7 dargestellten Ausführungsform
mit glattrandiger Säuleninnenseite besteht fernerhin noch darin, daß der obere Abschnitt 50 der Säule dazu dienen kann,
einen Fuß eines über die Rohrabschnitte 10 nach oben ragenden zweiten Säulenteils aufzunehmen, beispielsweise um in etwa 2 Metern Höhe eine nach oben gerichtete Raumleuchte oder eine andere Einrichtung zu tragen.

Im wesentlichen aus Gründen der Platz- und Transportkostenersparnis kann die Abschlußplatte 24 (Fig. 3 - 5) in Richtung ihres Durchmessers 2-, 3- oder 4-geteilt sein, wobei die Plattenteile an ihrer Unterseite miteinander verbunden sind.-

Statt die Energie- und Kommunikationsleitungen innerhalb der Säule 3 zu führen, können die Leitungen unterhalb der Rohrabschnitte 10 auch auf der Außenseite der Säule 3 entlang geführt werden.- Ähnliches gilt von der Führung dieser Leitungen an den Tragarmen 15, 34. Auch dort können die Leitungen mittels Klemmschellen gehalten sein.

Die Rohrabschnitte können eine Länge von einem halben Meter oder mehr erhalten, wodurch die Tragarme an ihren Enden Geräte mit hohem Gewicht aufnehmen können.- Schwingungen an den Tragarmen, z.B. durch Betätigen der Geräte an den Tragarmenden werden an den Biegungen 18 zwischen den Abschnitten 16, 17 der Tragarme gedämpft oder absorbiert, so daß beim Abheben und Auflegen eines Telefonhörers z.B. auf den Apparat an einem Tragarmende nicht der Bildschirm oder die Lampe am Ende eines anderen Tragarmes zu wackeln beginnt.

**Patentanwalt**

**Dipl.-Ing. H. Wangemann**

Dresdner Bank, Düsseldorf, Kto. 51–419 655
Postscheck-Konto: Köln 1688 12

**4 Düsseldorf, den**  23.6.1982
Stresemannstraße 28
Fernruf 36 35 31

0070421

Planmöbel Eggersmann

GmbH & Co. KG

Meine Akte Nr. 6128eu  W/L


P a t e n t a n s p r ü c h e


1) Freistehende Versorgungssäule zum Zuführen von Energie und
zum Zu- und Abführen von Kommunikationen zu Arbeitsgeräten,
insbesondere für Büros, mit einem Fußsockel oder einer Fußplatte und mit an der Säule angebrachten radialen, horizontal schwenkbaren Tragarmen für Arbeitsgeräte, durch gekennzeichnet, daß die Tragarme (15, 34) einen horizontalen (16,
43) und einen vertiaklen (22, 35) Abschnitt aufweisen und
in oder um den oberen Abschnitt der Säule (3) mehrere senkrechte Rohrabschnitte (10) kreisförmig um die Säulenmittelachse (S) angeordnet sind, an denen die vertikalen Abschnitte (22, 35) der in ihrer Höhenstellung einzeln einstellbaren und schwenkbaren Tragarme (15, 34) mit Versorgungsleitungen (14, 33) gehalten sind.


2) Versorgungssäule nach Anspruch 1, dadurch gekennzeichnet,
daß die kreisförmig angeordneten Rohrabschnitte (10) an der
Außenseite der Säule (3) angeschweißt oder angeschraubt sind
und die Säule unterhalb der Rohrabschnitte (10) auf Höhe
dieser Rohrabschnitte mit Durchtrittsöffnungen (13) für die
Versorgungsleitungen (14, 33) versehen ist.

3) Versorgungssäule nach Anspruch 1 und 2, dadurch gekennzeichnet, daß die auf der Außenseite der Säule (3) angeordneten Rohrabschnitte (10) von einer koaxial zu der Säule gelegenen zylindrischen Schürze (4) umschlossen sind, deren unteres Ende bis unterhalb der Durchtrittsöffnungen (13) für die Versorgungsleitungen (14, 33) reicht.

4) Versorgungssäule nach Anspruch 1, dadurch gekennzeichnet, daß die Rohrabschnitte (10) ring- oder käfigartig miteinander verbunden sind und der Ring oder Käfig aus Rohrabschnitten und diese verbindenden Flossen in oder um die Säule ein- bzw. aufschiebbar ist.

5) Versorgungssäule nach Anspruch 4, dadurch gekennzeichnet, daß der Ring oder Käfig aus den Rohrabschnitten mit der Schürze durch einen sich auf den oberen Stirnrand der Säule legenden aus- oder einwärts gerichteten Flansch höhenmäßig gehalten ist.

6) Versorgungssäule nach Anspruch 1 bis 5, gekennzeichnet durch einen derartigen Innen- oder Außendurchmesser des Ringes oder Käfigs aus Rohrabschnitten und Flossen, daß die Rohrabschnitte von der Säule mit geringem Spiel geführt sind.

7) Versorgungssäule nach Anspruch 1 und einem oder mehreren der Ansprüche 2 bis 6, dadurch gekennzeichnet, daß das untere Ende der Rohrabschnitte (10) durch eine Ringscheibe (31) abgeschlossen ist, durch die die Versorgungsleitung (33) in den Rohrabschnitt (10) und den Tragarm (34) axial
eintritt.

8) Versorgungssäule nach Anspruch 1 und einem der Ansprüche 2
bis 7, dadurch gekennzeichnet, daß die bis auf Tischhöhe
reichende Säule (3) eine Abschlußplatte (24) mit kreisförmig auf Höhe der Rohrabschnitte (10) gelegenen Löchern (27)
trägt, durch die die Tragarme (34) oder eine Innenhülse (22)
derselben in die Rohrabschnitte (10) einschiebbar sind.

9) Versorgungssäule nach Anspruch 8, dadurch gekennzeichnet,
daß die Abschlußplatte (24) gegenüber der Säule (3) zentrierbar und gegenüber den Rohrabschnitten ausrichtbar ist.

10) Versorgungssäule nach Anspruch 1 und einem oder mehreren
der Ansprüche 2 bis 9, dadurch gekennzeichnet, daß die Tragarme oberhalb der Tischhöhe abgewinkelt oder abgebogen sind
und die Versorgungsleitung (14a) der Tragarme (15) mit der
Versorgungsleitung (14b) in der Säule (3) unterhalb des Rohrabschnitts (10) lösbar verbunden ist.

11) Versorgungssäule nach Anspruch 1 und einem oder mehreren der
Ansprüche 2 bis 10, dadurch gekennzeichnet, daß die Tragarme
sich auf den oberen Rand der Rohrabschnitte oder auf die
Abschlußplatte legende Flansche aufweisen.

12) Versorgungssäule nach Anspruch 1, dadurch gekennzeichnet,
daß der vertikale Abschnitt (35) der Tragarme (34) in den Rohrabschnitten (10) höhenverstellbar und feststellbar ist.

13) Versorgungssäule nach Anspruch 1 und einem oder mehreren der Ansprüche 2 bis 12, dadurch gekennzeichnet, daß die Rohrabschnitte in Abständen übereinander diametral oder in Richtung einer Sehne an den Rohrquerschnitt sich gegenüberliegende Bohrungen (37) zum Durchstecken von die Höhenlage der Tragarme (34) bestimmenden Zapfen oder Bolzen (38) aufweisen.

14) Versorgungssäule nach Anspruch 1 und einem oder mehreren der Ansprüche 2 bis 13, dadurch gekennzeichnet, daß der horizontale oder annähernd horizontale Abschnitt (41) des Tragarms (34) teleskopartig verlängerbar ist.

1/3

*Fig. 1*

*Fig. 2*

*Fig. 3*

*Fig. 4*

0070421

Fig. 5

Fig. 6

Fig. 7

Fig.8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | FR-A-2 082 755  (PIGEON)<br>*  Seite 1, Zeilen 20-32; Figur 2 * | 1,8-11 | H 02 G    3/04 |
| Y | US-A-3 057 994  (IRMISCHER)<br>* Spalte 1, Zeilen 46-64; Figur 2 * | 1,2 | |
| A | US-A-2 675 465  (SAELEN)<br><br>* Spalte 2, Zeilen 12-30; Figuren 1,2 * | 1,12, 14 | |
| A | FR-A-2 129 744  (BURGIN)<br>*  Seite 7, Zeilen 19-28; Figuren 6-8 * | 1 | |
| A | FR-A-1 582 968  (CHATERRE)<br>*  Seite 1, Zeilen 1-11; Seite 2, Zeilen 11-13; Figur 11 * | 1 | |

RECHERCHIERTE SACHGEBIETE (Int. Cl. ³)

H 02 G    3/00
A 47 B   17/00
F 21 V   21/00

Der vorliegende Recherchenbericht wurde für alle Patentansprüche erstellt.

| Recherchenort | Abschlußdatum der Recherche | Prüfer |
|---|---|---|
| DEN HAAG | 04-11-1982 | TIELEMANS H.L.A. |